# EUROPÄISCHE PATENTSCHRIFT

(11) **EP 0 887 656 B1**
(45) Veröffentlichungstag und Bekanntmachung des Hinweises auf die Patenterteilung: **29.11.2000**
(21) Anmeldenummer: 98116907.1
(22) Anmeldetag: 08.09.1998
(51) Int. Cl.: G01S 5/12, G01S 5/00, H04B 10/105, B64G 1/10

(54) **Verfahren zur Bestimmung der orbitalen Positionen von Satelliten in LEO-Netzwerken**
Process for determing the orbital position of satellites in LEO networks
Procédé pour déterminer la position orbitale de satellites dans des réseaux "LEO"

(30) Priorität: 16.02.1998 CH 37098
(43) Veröffentlichungstag der Anmeldung: 30.12.1998
(73) Patentinhaber: Contraves Space AG, 8052 Zürich (CH)
(72) Erfinder: Dreischer, Thomas, 8152 Opfikon (CH); Kellermeier, Johann, 85579 Neubiberg (DE)
(74) Vertreter: OK pat AG

(56) Entgegenhaltungen:
- EP-A- 0 284 075
- DE-A- 4 243 395
- US-A- 4 691 882
- MITSUO NOHARA ET AL: "A LINK STUDY OF A LOW-EARTH ORBIT SATELLITE COMMUNICATIONS SYSTEM USING OPTICAL INTERSATELLITE LINKS" IEICE TRANSACTIONS ON COMMUNICATIONS, Bd. E76-B, Nr. 5, 1. Mai 1993, Seiten 536-543, XP000381142
- AGNIERAY P ET AL: "STUDY AND DEFINITION OF AN OPTICAL INTERSATELLITE LINK WITHIN A SATELLITE CLUSTER" 35TH CONGRESS OF THE INTERNATIONAL ASTRONAUTICAL FEDERATION.;LAUSANNE, SWITZ, 1984, XP002063790 1984 AIAA, NEW YORK, NY, USA

## Beschreibung

Die vorliegende Erfindung betrifft ein Verfahren zur Bestimmung der orbitalen Positionen von Satelliten in LEO-Netzwerken gemäss Patentanspruch 1.

Bei Kommunikationssatellitensystemen, die sich in LEO-(Low Earth Orbit)-Bahnen bewegen und sich auf sogenannte globale Kommunikationsnetzwerke beziehen, werden Intersatelliten-Links verwendet, um in der Art eines "Himmelsnetzwerkes" (network in the sky) die einzelnen Satelliten des Systems untereinander zu verbinden. Es sind bereits viele Satellitensysteme geplant oder sogar in Bau. Besonders wichtig für die vorliegende Erfindung sind solche Satelliten, die eine Echtzeit-Übertragung von Daten, Ton und Video erlauben und als "Big-LEOs" bekannt sind. Als Beispiele hierfür seien die sogenannten ursprünglich von MOTOROLA eingeführten Systeme IRIDIUM und CELESTRI und das TE-LEDESIC-System von Microsoft & McCaw Corporation. Man erwartet, dass all diese Systeme um das Jahr 2000 funktionsfähig sein werden.

Mitsuo Nohara et al. haben in den IEICE Transactions on Communications, Bd. E76-B, Nr. 5, 1-5-1993, Seiten 536 - 543: "A Link Study of a Low-Earth Orbit Satellite Communications System Using Optical Intersatellite Links", eine Satelliten-Konfiguration beschrieben, bei der durch einen intermittierenden Gebrauch von Kommunikationswegen zwischen jeweils sich in tieferen Himmelszonen befindenden Satelliten in den Perioden höherer Stabilität die Sicherheit erhöht werden kann. Nach diesem mit optoelektronischen Mitteln durchgeführten Verfahren, werden je nach Höhe vorzugsweise zwischen 200 und 50 Satelliten verwendet.

Aus der deutschen Offenlegungsschrift DE-42 43 395 A1 ist ein Verfahren zur koordinierten Positionshaltung eines geostationären Satellitenschwarms aus einer Anzahl Satelliten in einem gemeinsamen eingeschränkten Bereich auf der geostationären Umlaufbahn bekannt. Dieses Verfahren bezieht sich auf ein Toleranzfenster eines Satellitenschwarms, in dem sogenannte MASCOT-Satelliten ausgewählt werden. Nach diesem Verfahren werden die Bahnkorrekturmanöverdaten von der Bodenstation an den MASCOT-Satelliten übermittelt, in dem ein Relativbahnregelsystem installiert ist.

Der Gebrauch von Intersatelliten-Links (ISL) neben den üblichen Erd-Links (Downlinks und Uplinks, das heisst von Satellit zu Erde bzw. umgekehrt) unterscheidet die oben erwähnten LEO-Systeme von anderen, wie das GLOBALSTAR (von Globalstar Telecomms Ltd.). Der Hauptzweck der globalen Echtzeit-Satelliten-Kommunikationsnetzwerke besteht darin, bei Bedarf an irgendeinem Ort in der ganzen Welt eine variable zeitabhängige Übertragungskapazität zu gewährleisten. Ein derart dynamisches Kommunikationsnetzwerk bedingt ein Echtzeit-Management. Zudem wird ein universeller und leichter Zugang zum Netzwerk gefordert, sofern ein drahtloser Zugang angeboten wird, wie es z.B. bei IRIDIUM der Fall ist. Zu diesem Zweck wird die Bestimmung der genauen orbitalen Positionen aller Satelliten an der Bodenstation durchgeführt.

Üblicherweise wird die Aufrechterhaltung und Kontrolle der Bahn eines Satelliten von Boden aus gesteuert. Die notwendige Bahn-Justierung wird von der Bodenstation aus berechnet, und es wird eine Reihe von Befehlen erzeugt und zum Satelliten hinaufgeladen, die zur Kontrolle dann wieder herunter übertragen werden. Schliesslich sendet die Bodenstation einen Start-Befehl, um die Steuerbefehle zu starten, und der Satellit führt sie aus, indem er einen eigenen am Bord erzeugten Takt verwendet. Eine solche Sequenz schützt den Satelliten gegen Übertragungsfehler, da er sich oft ausserhalb der Sicht von der Bodenstation aus befindet.

Seit neuerem haben autonome Navigationssysteme dazu beigetragen, eine auch autonome Aufrechterhaltung der Bahn möglich, wirtschaftlich und sicher zu machen. Diese Systeme können vom GPS unterstützt sein oder völlig selbständig arbeiten (MANS von Microcosm). Bei LEO-Kommunikationsnetzwerken ist der wirtschaftliche Aspekt der Aufrechterhaltung der Umlaufbahn und der Konstellation von entscheidender Bedeutung, da eine grosse Anzahl Satelliten - bis zu mehreren hunderten - gleichzeitig gesteuert werden müssen.

Ein Mechanismus zur Verminderung des Risikos und zur Ausnützung der Autonomie bei der Aufrechterhaltung der Umlaufbahn ist die sogenannte überprüfte Autonomie, bei der die Bahn-Manöver zunächst am Bord eines jeden Satelliten berechnet, jedoch erst nach einer Überprüfung durch die Bodenstation ausgeführt werden.

Der grösste Teil der oben erwähnten LEO-Satelliten-Netzwerke besteht aus mehreren Bahnebenen auf derselben Höhe rund um die Erde. Im allgemeinen weisen alle Ebenen eines LEO-Netzwerkes dieselbe Inklination zum Äquator auf. In jeder Bahnebene ist dieselbe Anzahl Satelliten in gleichen Abständen verteilt. Solche Konstellationen werden "Walker"-Bahnen genannt. Die totale Anzahl Satelliten, gefolgt von der Anzahl Bahnebenen und der Inklination der Bahnebenen sind Charakteristika, die eine Unterscheidung aller existierenden LEO-Netzwerk-Konzepte erlauben.

Innerhalb eines Satellitennetzwerkes gibt es Untergruppen mit jeweils einer vorbestimmten Anzahl - zwischen vier und acht - Satelliten, die zu den erwähnten Kommunikationszwekken unter sich verbunden sind. Von einem Satelliten im Zentrum einer solchen Untergruppe aus gesehen, kann man zwei Typen von Intersatelliten-Links unterscheiden: "Intersatelliten-Links innerhalb der Ebene", das heisst Verbindungen zu Satelliten, die sich vorne oder hinten, jedoch in derselben Ebene befinden, und "Intersatelliten-Links zwischen den Ebenen", das heisst, Verbindungen zu Satelliten, die sich in einer benachbarten oder in einer nächst benachbarten Ebene befinden. Ein zusätzliches Merkmal eines jeden Satellitennetzwerkes wird durch die sogenannte "Phase zwischen den Ebenen" ausgedrückt, die die sich konstant während des Verlaufs ergebende Winkelverschiebung zwischen einem zentralen Satelliten einer Untergruppe und seinem benachbarten Satelliten in der direkt benachbarten Bahnebene beschreibt.

Ein wichtiges Problem, das sich normalerweise in jedem Echtzeit-LEO-Satellitennetzwerk stellt, das mit einer festen "Phase zwischen den Ebenen" arbeitet, ist, zu gewährleisten, dass Satelliten derselben Untergruppe immer im selben Verhältnis zueinander bleiben. Diese Anforderung ergibt sich aus der Notwendigkeit, die bestrahlten Bodenzonen zu überlappen.

Der Einsatz von Navigationsmethoden, die vom Boden aus durchgeführt oder unterstützt werden, um die grosse Anzahl Satelliten in LEO-Netzwerken zu überwachen, stellt einen relevanten Kostenfaktor dar bei der Aufrechterhaltung der Umlaufbahn während der Arbeitsphase eines aufgestellten Satellitennetzwerkes.

Es ist daher Aufgabe der vorliegenden Erfindung, ein Verfahren der eingangs erwähnten Art zu schaffen, das bei der Aufrechterhaltung der Umlaufbahn während der Arbeitsphase eines aufgestellten Satellitennetzwerkes weniger aufwendig ist.

Diese Aufgabe wird durch ein Verfahren mit den im kennzeichnenden Teil des Patentanspruchs 1 angegebenen Merkmalen gelöst.

Vorteilhafte Ausführungen dieses Verfahrens sind in den abhängigen Ansprüchen angegeben.

Im folgenden wird die Erfindung beispielsweise an Hand einer Zeichnung näher beschrieben. Es zeigt:
- **Fig. 1**: eine schematische Darstellung der Verkettung einzelner Formationen untereinander nach der Erfindung,
- **Fig. 2**: eine schematische Darstellung einer erfindungsgemässen Satelliten-Formation mit einem mit einer Bodenstation kommunizierenden Master-Satelliten,
- **Fig. 3**: eine schematische Darstellung einzelner Formationen nach der Erfindung am Beispiel des Celestri-Systems, und
- **Fig. 4**: eine schematische Darstellung einer erfindungsgemässen Formation mit einer kontinuierlichen ISL-Verbindung bei der Kreuzung von Orbitebenen am Beispiel des Celestri-Systems.

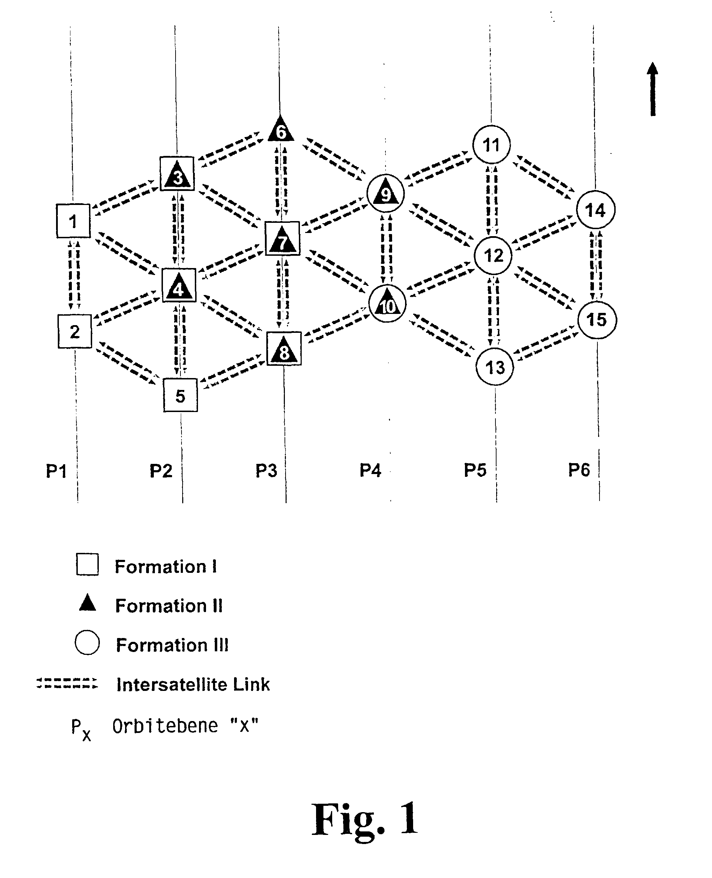

In **Fig. 1** sind sechs Umlaufbahnen durch je eine Bahnlinie **P1** bis **P6** dargestellt. In jeder Bahnebene können sich mehrere Satelliten nacheinander etwa in gleichen Abständen bewegen. Von diesen vielen möglichen Satelliten sind in **Fig. 1** nur einige dargestellt, nämlich die Satelliten **1** und **2** in der Bahn **P1**, die Satelliten **3, 4** und **5** in der Bahn **P2**, die Satelliten **6, 7** und **8** in der Bahn **P3**, die Satelliten **9** und **10** in der Bahn **P4**, die Satelliten **11, 12** und **13** in der Bahn **P5** und die Satelliten **14** und **15** in der Bahn **P6**.

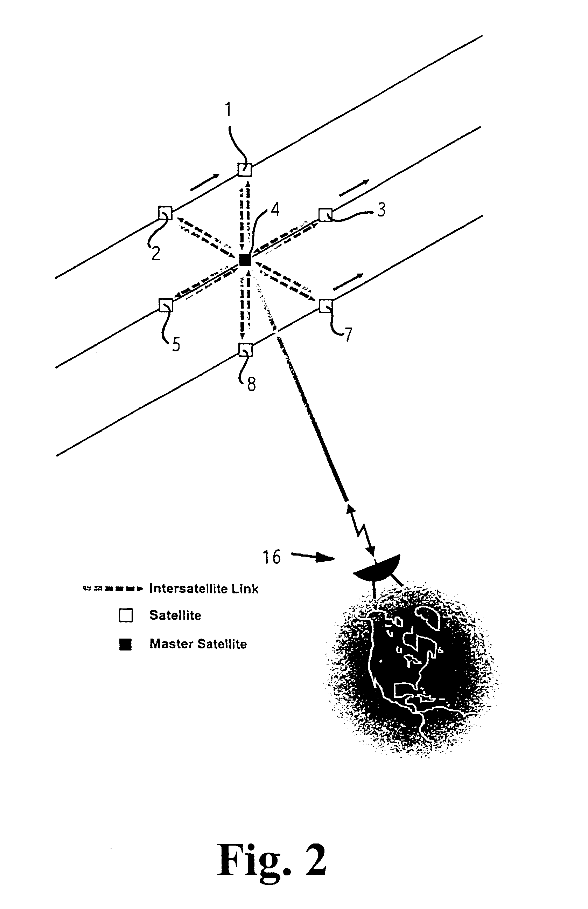

In **Fig. 2** sind die Satelliten **1** bis **5, 7** und **8** für sich dargestellt. Der sich in einer zentralen Stellung befindende Satellit **4** wird im Sinne der Erfindung als Master-Satellit ausgewählt, derart, dass er über Erd-Links mit einer Bodenstation **16** und über IS-Links jeweils bidirektional mit den anderen Satelliten verbunden ist.

Die Satelliten **1** und **2** bilden demnach eine erste Ring-Konstellation, die Satelliten **3, 4** und **5** eine zweite Ring-Konstellation und die Satelliten **7** und **8** eine dritte Ring-Konstellation. Im allgemeinen wird ein Satelliten-Netzwerk nach der Erfindung aus mindestens zwei "Ring-Konstellationen" aufgebaut, die alle in der gleichen Orbithöhe umlaufen, wobei eine Ring-Konstellation aus mindestens zwei Satelliten besteht, die in einem bestimmten festen Winkelversatz zueinander in derselben meist kreisförmigen Umlaufbahn kreisen.

Die Satelliten **3, 4** und **5** der zweiten Ring-Konstellation bilden eine Art Kommunikations-Ring innerhalb ihrer Umlaufbahn, da sie über IS-Links miteinander verbunden sind. Die vorliegende Erfindung beruht unter anderem auf der Erkenntnis, dass miniaturisierte optische Terminals in Kombination mit einer spezifischen Terminal-Akkomodation auf dem Satelliten (nach CH **-1153/97**) eine ununterbrochene Intersatelliten-Kommunikation nicht nur zwischen Satelliten ein und derselben Umlaufbahn, sondern auch zwischen einem Master-Satelliten und einzelnen Satelliten anderer benachbarten Ring-Konstellationen ermöglichen. Im Sinne der vorliegenden Erfindung wird daher die Vernetzung einzelner Satelliten einer Ring-Konstellation mit einzelnen Satelliten anderer benachbarter Ring-Konstellationen als "Formation" aufgefasst. Dies bringt den Vorteil mit sich, dass dadurch zusätzlich zu den eigentlichen Kommunikationszwecken auch die Realisierung einer wenig aufwendigen permanenten sich ständig erneuernden Information über die relativen Verlaufpositionen aller Satelliten der jeweiligen Formation ermöglicht wird, wobei diese Information auch zur Aufrechterhaltung einer genauen "Phase zwischen den Ebenen" aller Satelliten einer Formation benutzt werden kann.

Bei Anwendung einer kontinuierlichen Inter-Satelliten-Kommunikation wie oben beschrieben können Intersatelliten-Links durch am Master-Satellit durchgeführte Rechnungen unterstützt werden, um bei der genauen Berechnung der exakten orbitalen Position jedes einzelnen Satelliten der Konstellation eine wesentliche Verminderung des am Boden erforderlichen Aufwands zu erzielen.

Um dieses Ziel zu erreichen, wird zunächst die genaue orbitale Position des vorzugsweise zentralen Master-Satelliten einer Formation bestimmt, und zwar mittels üblichen vom Boden aus unterstützten Messungen bzw. über GPS, MANS, autonom an Bord des Satelliten. Die genaue Position aller anderen Satelliten derselben Formation wird dann aus Range- und Pointing-Daten ermittelt, die von jedem IS-Link-Terminal geliefert werden müssen (Fig. **2**). Diese Pointing-Daten sind nach Errichtung der Intersatelliten-Links gut bekannt und werden ständig aktualisiert.

Da immer sich wenigstens ein Satellit eines Netzwerkes in Kontakt mit der Bodenstation befindet, ist dauernd jede erforderliche Information über einen jeden Satelliten dieses Netzwerkes dadurch verfügbar, dass eine geeignete Route über die verschiedenen Intersatelliten-Links gebildet wird, und zwar auch dann, wenn der interessierende Satellit sich nicht in Sicht von der Bodenstation aus befindet.

**Fig. 1** zeigt, dass ein Satellitennetzwerk als aus mehreren Formationen bestehend betrachtet werden kann, die zusammen das ganze Netzwerk bilden. Obwohl alle Satelliten gleich aufgebaut sein können, sind in **Fig. 1** die Satelliten der ersten Formation durch kleine viereckige Ideogramme, die Satelliten der zweiten Formation in ähnlicher Weise durch Dreiecke und die Satelliten der dritten Formation durch Kreise dargestellt.
Aus der Zeichnung ist somit ersichtlich, dass die Satelliten **3, 4 , 7** und **8** sowohl an der ersten als auch an der zweiten Formation teilnehmen. und dass die Satelliten **9** und **10** der zweiten und der dritten Formation angehören. In diesem Beispiel können zweckmässigerweise die Satelliten **4, 7** und **12** als Master-Satelliten ausgewählt werden. Die Bestimmung der orbitalen Position des Master-Satelliten einer Formation wird durch Anwendung traditioneller Methoden von einer Bodenstation aus bzw. durch Verwendung von GPS oder MANS realisiert.

Die genauen orbitalen Positionen aller Satelliten einer Formation werden dadurch ermittelt, dass man von der Information des betreffenden Intersatellitenlinks zwischen dem zentralen Master-Satelliten der Formation und einem interessierenden Satelliten aus dieser Formation Gebrauch macht. Diese Intersatellitenlink-Information besteht üblicherweise aus Range-, Range-Raten- und Winkelinformationen in der Pointing-Richtung (Azimut und Elevation). Sofern der aktuelle Winkel zwischen dem Intersatellitenlink-Terminal des Mastersatelliten und dem interessierenden Satelliten bekannt ist, ist es möglich, daraus den Pointing-Vektor vom Mastersatelliten zum interessierenden Satelliten zu ermitteln.

Insbesondere bei LEO-Netzwerken mit fixen Intersatellitenphasen, z.B. Iridium, Celestri, ist die Intersatelliten-Range-Information extrem nützlich. Durch Überwachung der Range-Information eines Intersatelliten-Links ist es möglich, vorauszussagen, ob die Satelliten einer Formation sich in einem fixen Zustand gegeneinander befinden, oder ob relative Bewegungen stattfinden. Es ist daher durch Überwachung der Intersatelliten-Range-Information möglich, gegenseitige relative Bewegungen zwischen den Satelliten zu kompensieren. Eine solche langzeitige Abdrift ergibt sich hauptsächlich durch den Einfluss von Sonne, Mond und gegebenenfalls der Atmosphäre. Da eine solche Voraussage sehr empfindlich ist, können über die Antriebsdüsen der Satelliten kleine Korrektur-Manöver durchgeführt werden, bevor sich Positionsfehler kumulieren.

Durch die Erfindung wurde die Erkenntnis gewonnen, dass theoretisch bei Verwendung von p Formationen in einem aus k Satelliten bestehenden Netzwerk der Aufwand für die Messungen, die zur Bestimmung der genauen orbitalen Positionen aller k Satelliten an der Bodenstation durchgeführt werden müssen, um den Faktor k/p reduziert werden kann. In der Praxis kann dieser Wert nicht erreicht werden, da jedes Netzwerk einen Rand aufweist, der eine Abgrenzung des Netzwerks und dadurch auch eine geometrische Unterbrechung desselben darstellt. Deshalb sind einige zusätzliche Intersatellitenlinks notwendig, um die Position der Satelliten einer Konstellation zu ermitteln, die sich in der Nähe des Randes befinden.

Die zusätzlichen Informationen über die Pointing-(Ausrichtungs-)-Daten aller Intersatelliten-Terminals des Masters einer Formation - die Werte über Entfernungen, Winkel und ihre zeitlichen Ableitungen d/dt und d²/dt² umfassen - ermöglichen die Verbesserung der Genauigkeit ein und derselben Positions-Messung durch Überlagerung aller Pointing-Daten. In der Regel bestehen Formationen aus **5** bis **9** Satelliten. Ausgehend von einer Verbesserung um den Faktor √n bei n an der Positionsbestimmung beteiligten Pointing Datensätzen ergibt sich damit eine Verbesserung der Genauigkeit um einen Faktor 2.2 bis zu einem Faktor 3.

Das Vorhandensein von Bordrechnern bei allen Satellitentypen in LEO-Netzwerken erlaubt es, den Satelliten eine laufende Aktualisierung und Speicherung seiner Positions- und Pointing-Datensätze autonom durchführen zu lassen, vorzugsweise in Zeiten verminderter Aktivität bzw. verminderter Belastung durch andere Satelliten-Subsysteme.

Im Fall, dass ein Satellit einer Formation aufhört zu arbeiten, ist es trotzdem möglich, die Position aller anderen Satelliten zu ermitteln. Sogar wenn der zentrale Satellit der Formation ausfällt, kann aus einem der benachbarten Satelliten ein neuer Master bestimmt werden.

In Satellitennetzwerken ergibt sich eine inhärente Redundanz dadurch, dass jeder Satellit durch normalerweise mehr als einen Intersatelliten-Link mit anderen benachbarten Satelliten verbunden ist; jeder Intersatellitenlink kann daher über einen dazwischen geschalteten Master die genaue Position eines Satelliten ermitteln. Aus der Baugleichheit aller Satelliten einer Netzwerkes ergibt sich die Möglichkeit, entsprechend den Erfordernissen jeden Satelliten als Master einer Formation auszuwählen. So kann zum Beispiel Satellit **7** in **Fig. 1** auch als Master für die erste Formation ausgewählt werden. Durch die ring-übergreifende kontinuierliche Verbindung aller Satelliten einer Formation wird daher in vorzüglicher Weise eine exakte Positionsbestimmung aller Satelliten einer Formation ermöglicht.

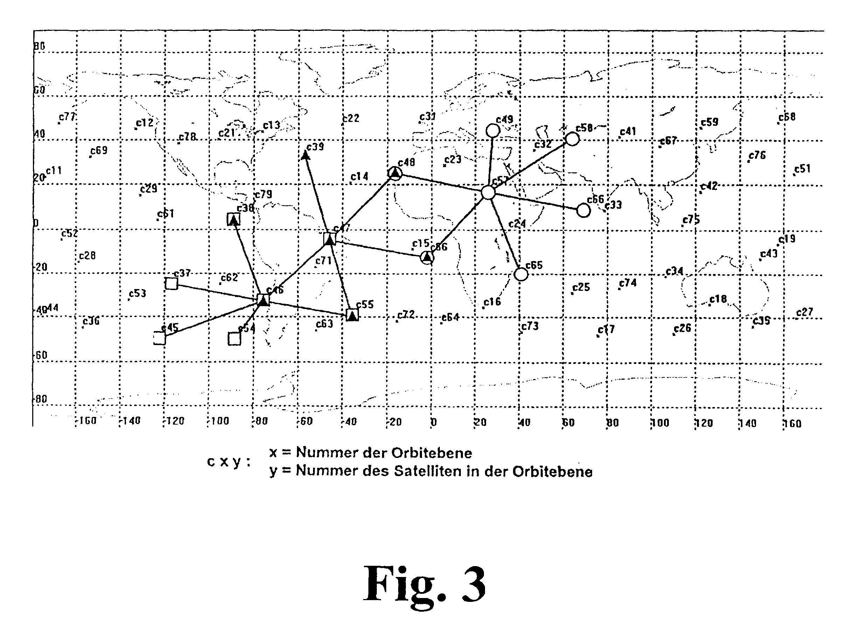

**Fig. 3** zeigt einige Formationen innerhalb des Celestri-LEO-Netzwerkes. Daraus ist ersichtlich, dass das geometrische Satelliten-Netzwerk aus Ring-Konstellationen aufgebaut ist, und dass ein Kommunikations-Netzwerk aus ring-übergreifenden Formationen besteht.

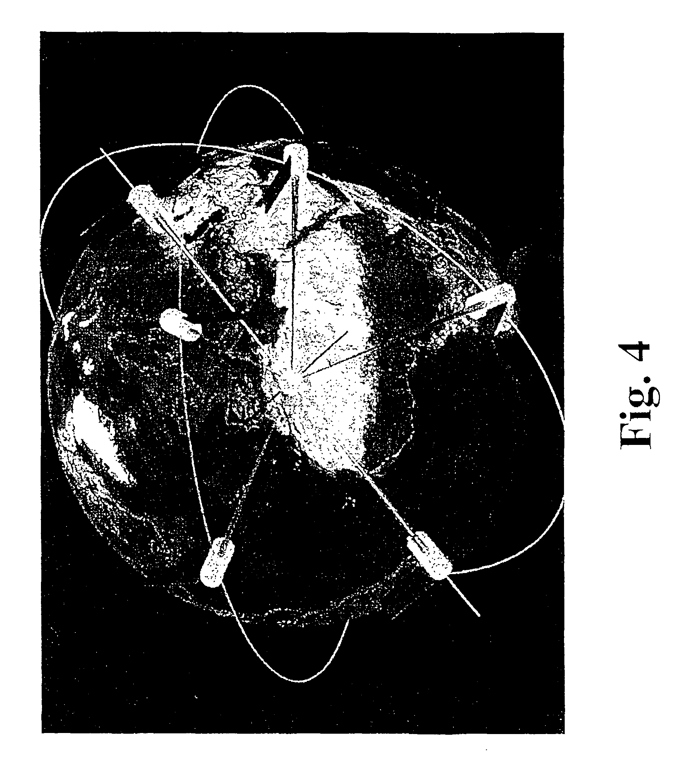

**Fig. 4** zeigt an Hand eines Celestri-Beispiels, dass auch bei der Kreuzung von Orbitebenen eine kontinuierliche ISL-Verbindung innerhalb einer Formation möglich ist.

Die Langzeitüberwachung aller Pointing-Daten der Intersatellitenlinks eines Masters kann zudem genutzt werden, um beim Überschreiten einer bestimmten Toleranzgrenze Steuersignale zur Bahnkorrektur an den Satelliten des betreffenden Intersatellitenlinks zu senden.

## Patentansprüche

1. Verfahren zur Bestimmung der orbitalen Positionen von Satelliten in LEO-Netzwerken mit Ring-Konstellationen,
**dadurch gekennzeichnet, dass**
ein Satellit (**4**) einer ausgewählten Ring-Konstellation (**3, 4, 5**) als Master-Satellit bestimmt wird,
dass aus diesem Master-Satelliten (**4**) und mindestens je einem weiteren Satelliten (**3, 5**) von der ausgewählten Ring-Konstellation und von zwei weiteren Ring-Konstellationen (**1, 2; 6, 7, 8**) eine Satelliten-Formation (**1, 2, 3 , 4, 5, 7, 8**) gebildet wird,
dass der Master-Satellit (**4**) in bidirektionale Kommunikation mit einer Bodenstation gebracht wird,
dass der Master-Satellit (**4**) optisch über miniaturisierte optische Terminals bidirektional durch unterbrechungsfreie Intersatelliten-Links in Kommunikation mit den anderen Satelliten der Formation (**1, 2, 3 , 4, 5, 7, 8**) gebracht wird,
dass mindestens der Master-Satellit (4) einen Bordrechner zur Unterstützung der Rechnungen der Bodenstation aufweist, um Informationsdaten zur Bestimmung der orbitalen Positionen der Satelliten dieser Formation zu gewinnen, und
dass mindestens zwei derartige Formationen (**1, 2, 3 , 4, 5, 7, 8; 3, 4, 6, 7, 8, 9, 10**) mit mindestens einen gemeinsamen Satelliten (**3; 8**) gebildet werden, über den ein unterbrechungsfreier Kommunikationsweg zwischen den zwei Master-Satelliten (**4, 7**) geschaffen wird, um Informationsdaten zur Bestimmung der orbitalen Positionen der Satelliten der einen Formation zum Master-Satellit der anderen Formation zu liefern.

2. Verfahren nach Anspruch 1, **dadurch gekennzeichnet, dass**
um die Genauigkeit der Positionsbestimmungen zu verbessern, die Positionen der Satelliten mittels Durchschnittswerten aus mehreren verschiedenen Pointing-Datensätzen ermittelt werden, die durch verschiedene Routen und/oder nacheinander gewonnen werden.

3. Verfahren nach Anspruch **1** oder **2**, **dadurch gekennzeichnet, dass**
die Bordrechner aller Satelliten einer Formation eine laufende Aktualisierung und Speicherung der Positions- und Pointing-Datensätze umfassenden Informationsdaten durchführen, vorzugsweise in Zeiten verminderter Aktivität oder verminderter Belastung durch andere Satelliten-Subsysteme.

4. Verfahren nach einem der Ansprüche **1** bis **3**,
**dadurch gekennzeichnet, dass**
immer mindestens ein Master-Satellit (**4, 7, 12**) in Verbindung mit der Bodenstation bleibt.

5. Verfahren nach einem der Ansprüche **1** bis **4**,
**dadurch gekennzeichnet, dass**
die Informationsdaten eine Intersatellitenlinks-Information umfassen, die Range-, Pointing-, Daten- und Winkelinformationen in der Pointing-Richtung (Azimut und Elevation) aufweist.

6. Verfahren nach einem der Ansprüche **1** bis **5**,
**dadurch gekennzeichnet, dass**
zuerst mittels vom Boden aus unterstützten Messungen die genaue orbitale Position eines Master-Satelliten einer Formation bestimmt wird, und
dass dann die genaue Position aller anderen Satelliten derselben Formation aus Range- und Pointing-Daten ermittelt wird, die von jedem IS-Link-Terminal geliefert werden.

7. Verfahren nach einem der Ansprüche **1** bis **6**,
**dadurch gekennzeichnet, dass**,
von einem Master-Satellit aus die Range-Informationen der Satelliten-Links überwacht werden, um festzustellen, ob sich Positionsfehler kumulieren, die vorbestimmte Toleranzgrenzwerte überschreiten, und dass er nach Massgabe dieser Überwachung Steuersignale zur Betätigung von Satelliten-Antrieben liefert, um in einem solchen Fall die Position eines Satelliten zu korrigieren.

8. Verfahren nach einem der Ansprüche **1** bis **7**,
**dadurch gekennzeichnet, dass**
jede Formation aus 4 bis 12 Satelliten besteht.

9. Verfahren nach einem der Ansprüche **1** bis **8**,
**dadurch gekennzeichnet, dass**
bei der Kreuzung von Orbitebenen eine kontinuierliche ISL-Verbindung innerhalb jeder Formation aufrechterhalten wird.

10. Verfahren nach einem der Ansprüche **1** bis **9**,
**dadurch gekennzeichnet, dass**
die Langzeitüberwachung aller Pointing-Daten der Intersatellitenlinks eines Masters genutzt wird, um beim Überschreiten einer bestimmten Toleranzgrenze Steuersignale zur Bahnkorrektur an den Satelliten des betreffenden Intersatellitenlinks zu senden.

## Claims

1. A method of determining the orbital positions of satellites in LEO networks comprising ring constellations,
**characterised in that**
a satellite (**4**) of a selected ring constellation (**3, 4, 5**) is determined as the master satellite,
that a satellite formation (**1, 2, 3, 4, 5, 7, 8**) is formed in each case from said master satellite (**4**) and from at least one further satellite (**3, 5**) of the selected ring constellation and from two further ring constellations (**1, 2; 6, 7, 8**),
that the master satellite (4) is brought into bidirectional communication with a ground station,
that the master satellite (**4**) is brought into bidirectional optical communication with the other satellites of the formation (**1, 2, 3, 4, 5, 7, 8**) by uninterruptible inter-satellite links via miniaturised optical terminals,
that at least the master satellite (**4**) comprises an on-board computer for assisting the calculations of the ground station in order to obtain information data for determining the orbital positions of the satellites of said formation, and
that at least two formations (**1, 2, 3, 4, 5, 7, 8; 3, 4, 6, 7, 8, 9, 10**) of this type are formed which comprise at least one common satellite (**3; 8**) via which an uninterruptible communication path is created between the two master satellites (**4, 7**) in order to provide information data for determining the orbital positions of the satellites of one formation in relation to the master satellite of the other formation.

2. A method according to claim **1**, **characterised in that**, in order to improve the accuracy of the positional determinations, the positions of the satellites are determined by means of average values of a plurality of different sets of pointing data which are obtained by different routes and/or in succession.

3. A method according to claims **1** or **2**, **characterised in that** the on-board computers of all the satellites of a formation carry out continuous updating and storage of the information data which comprise sets of positional and pointing data, preferably during periods of reduced activity or of reduced loading by other satellite subsystems.

4. A method according to any one of claims **1** to **3**,
**characterised in that**
at least one master satellite (**4, 7, 12**) always remains in communication with the ground station.

5. A method according to any one of claims **1** to **4**,
**characterised in that**
the information data comprise inter-satellite link information which includes range-, pointing-, data- and angular information in the direction of pointing (azimuth and elevation).

6. A method according to any one of claims **1** to **5**,
**characterised in that**
the accurate orbital position of a master satellite of a formation is first determined by means of measurements assisted from the ground, and
that the accurate position of all the other satellites of the same formation is then determined from range and pointing data which are supplied by each IS link.

7. A method according to any one of claims **1** to **6**,
**characterised in that**
the range information of the satellite link is monitored from a master satellite in order to establish whether positional errors are accumulating which exceed predetermined limiting tolerance values, and that according to said monitoring operation the master satellite supplies control signals for actuating satellite propulsion systems in order to correct the position of a satellite in a situation such as this.

8. A method according to any one of claims **1** to **7**,
**characterised in that**
each formation consists of 4 to 12 satellites.

9. A method according to any one of claims **1** to **8**,
**characterised in that**
when orbital planes intersect a continuous ISL connection is maintained within each formation.

10. A method according to any one of claims **1** to **9**,
**characterised in that**
the long-term monitoring of all the pointing data of the inter-satellite link of a master is utilised in order to transmit control signals for orbital correction to the satellites of the inter-satellite link concerned if a defined tolerance limit is exceeded.

## Revendications

1. Procédé destiné à déterminer les positions orbitales de satellites dans des réseaux LEO à constellations annulaires,
**caractérisé en ce que**
un satellite **(4)** d'une constellation annulaire choisie **(3, 4, 5)** est défini comme satellite-maître,
qu'une formation de satellites **(1, 2, 3, 4, 5, 7, 8)** est constituée à partir de ce satellite-maître **(4)** et d'au moins un autre satellite **(3, 5)** de la constellation annulaire choisie et de deux autres constellations annulaires **(1, 2 ; 6, 7, 8)**,
qu'une communication bidirectionnelle est établie entre le satellite-maître **(4)** et une station terrestre,
qu'une communication bidirectionnelle est établie, de façon optique, entre le satellite-maître **(4)** et les autres satellites de la formation **(1, 2, 3, 4, 5, 7, 8)**, par des liaisons intersatellites ininterrompues fonctionnant à l'aide de terminaux optiques miniaturisés,
qu'au moins le satellite-maître **(4)** possède un ordinateur de bord assistant la station terrestre dans ses calculs, dont le but est d'acquérir des informations destinées à déterminer les positions orbitales des satellites de cette formation, et
que sont constituées au moins deux formations du même type **(1, 2, 3, 4, 5, 7, 8 ; 3, 4, 6, 7, 8, 9 ,10)** avec au moins un satellite commun **(3 ; 8)**, au moyen duquel est établie une liaison ininterrompue entre les deux satellites-maîtres **(4, 7)**, afin de fournir des informations, destinées à déterminer les positions orbitales des satellites d'une première formation, au satellite-maître de la deuxième formation.

2. Procédé selon la revendication **1**, **caractérisé en ce que**
afin d'améliorer la précision du calcul des positions, les positions des satellites sont déterminées à l'aide de valeurs moyennes provenant de plusieurs séries de données de pointage différentes, obtenues par différents itinéraires et/ou de façon successive.

3. Procédé selon la revendication **1** ou **2**, **caractérisé en ce que**
les ordinateurs de bord de tous les satellites d'une formation procèdent à une actualisation et à une mémorisation permanentes des informations, qui comprennent des données de position et de pointage, de préférence à des moments où l'activité ou le trafic en provenance d'autres sous-systèmes de satellites est moins intense.

4. Procédé selon l'une des revendications **1** à **3**,
**caractérisé en ce que**
au moins un satellite-maître **(4, 7, 12)** reste toujours en liaison avec la station terrestre.

5. Procédé selon l'une des revendications **1** à **4**,
**caractérisé en ce que**
les données comprennent des informations des liaisons intersatellites, constituées elles-mêmes d'informations de mesure de distance, de pointage, de données et d'angle dans la direction du pointage (azimut et élévation).

6. Procédé selon l'une des revendications **1** à **5**,
**caractérisé en ce que**
on détermine tout d'abord la position orbitale exacte du satellite-maître d'une formation à l'aide de mesures assistées depuis la terre, et
qu'on calcule ensuite la position exacte de tous les autres satellites de cette même formation à partir d'informations de mesure de distance et de pointage fournies par chaque terminal des liaisons intersatellites.

7. Procédé selon l'une des revendications **1** à **6**,
**caractérisé en ce que**
les informations de mesure de distance fournies par les liaisons intersatellites sont contrôlées à partir d'un satellite-maître, afin de s'assurer que des erreurs de position ne s'accumulent pas et que les valeurs limites de tolérance prédéfinies ne sont pas dépassées, et que le satellite-maître fournit, selon les résultats de ce contrôle, des signaux visant à actionner la commande des satellites, dans le but de corriger la position d'un satellite en cas d'erreur ou de dépassement.

8. Procédé selon l'une des revendications **1** à **7**,
**caractérisé en ce que**
chaque formation est composée de 4 à 12 satellites.

9. Procédé selon l'une des revendications **1** à **8**,
**caractérisé en ce que**
lors du croisement de différents niveaux d'orbites, une liaison ISL permanente est maintenue à l'intérieur de chaque formation.

10. Procédé selon l'une des revendications **1** à **9**,
**caractérisé en ce que**
la surveillance au long cours de toutes les données de pointage des liaisons intersatellites d'un maître sert à envoyer au satellite de la liaison intersatellite concernée, en cas de dépassement d'une limite de tolérance déterminée, des signaux de commande visant à corriger l'orbite.
